# EUROPÄISCHE PATENTANMELDUNG

(11) **EP 1 030 067 A1**
(43) Veröffentlichungstag der Anmeldung: **23.08.2000**
(21) Anmeldenummer: 99810149.7
(22) Anmeldetag: 18.02.1999
(51) Int. Cl.: F16B 7/04

(54) **Klemmverbindung für ein aus Rohren zusammengesetztes Präsentationsgestell**

(71) Anmelder: Fehlbaum & Co., CH-4132 Muttenz (CH)
(72) Erfinder: Walter, Herbert, 79379 Müllheim (DE); Kury, Werner, 79379 Müllheim (DE)
(74) Vertreter: Ullrich, Gerhard, Dr.

(57) **Zusammenfassung**

Mit der Klemmverbindung, bestehend aus einem Verbindungselement (**1**) verschiedener Konfiguration und Rohrstücken (**2**) quadratischen Querschnitts, lassen sich Präsentationsgestelle herstellen. Vom Verbindungselement (**1**) erstrecken sich Zapfen (**11**), die in ein Rohrstück (**2**) eingesteckt und verdreht werden, wobei die Verklemmung entsteht. Die Klemmzonen werden von Querrippen gebildet, die zwischen den Zapfen (**11**) umlaufenden Radialnuten liegen, einen oberen Gipfel aufweisen und nach beiden Seiten zu den benachbarten Abflachungen hin abfallen. Beim Drehen in die *Klemmstellung* laufen die Querrippen sukzessive an der jeweils benachbarten Wandung bis zu den Gipfeln auf. Mit der Klemmverbindung können grössere Längen eines stabileren Rohrs dickerer Wandstärke verwendet werden. Dennoch lässt sich bei mässigem Kraftaufwand die Klemmverbindung mit einem intensiven Reibschluss und hoher Auszugsfestigkeit herstellen.

## Beschreibung

### Anwendungsgebiet der Erfindung

Die Erfindung betrifft eine lösbare Klemmverbindung für ein Präsentationsgestell aus Rohr von unrundem, vorzugsweise von quadratischem Querschnitt, und umfasst ein Verbindungselement verschiedener Konfiguration sowie ein dazu komplementär dimensioniertes Rohr. Mit einer Vielzahl von derartigen Verbindungselementen und Rohren lassen sich Präsentationsgestelle in Gestalt von Regalen, Vitrinen, Schränken, Tischen und Podesten aufbauen, wie sie besonders auf Messen und in Geschäften eingesetzt werden. Solche Gestelle werden häufig für nur kurze Zeitspannen benötigt, müssen sich also rasch auf- und wieder abbauen lassen. Dennoch ist ein solider Zusammenhalt der Konstruktion erforderlich, da die Gestelle regem Publikumsverkehr ausgesetzt sein können und der Präsentation auch von Waren mit erheblichem Wert, wie z.B. Porzellan, dienen. Besonders für Laden- und Messestandseinrichtungen ist heutzutage eine grosse Variabilität, ästhetische Gestaltung aber auch kostengünstige Lösung bei Präsentationsgestellen wünschenswert. Im demontierten Zustand, während des Transports und der Lagerung, sollen die Teile möglichst wenig Platz beanspruchen.

### Stand der Technik

Eine Klemmverbindung dieses Typs mit einem Verbindungselement und im Querschnitt quadratischen Rohrstücken wird in der CH-A-454 555 offenbart. Das Verbindungselement besitzt Zapfen, die äusserlich vier jeweils um 90° versetzte längslaufende Abflachungen aufweisen. In der Montagestellung, d.h. die vier Abflachungen sind den vier Wandungen des Rohrstücks zugewandt, lässt sich der Zapfen des Verbindungselements in das Rohrstück einschieben, da die Bereiche des maximalen Querschnitts des Zapfens auf den Diagonalen des Rohrquerschnitts zu liegen kommen. Werden nun das Verbindungselement und das Rohrstück relativ zueinander um 45° verdreht, so quetschen sich die zwei Bereiche des maximalen Querschnitts des Zapfens jeweils zwischen zwei parallel zueinander erstreckende Wandungen und die Abflachungen liegen jetzt auf den Diagonalen des Rohrquerschnitts. Hierdurch ergibt sich in der Klemmstellung ein intensiver Reibschluss zwischen dem in das Rohrstück eingesteckten Zapfen und den Innenseiten der Wandungen des Rohrstücks. Weder lässt sich das Rohrstück vom Zapfen abziehen, noch leicht wieder in die Montagestellung zurückdrehen.

Auf den Zapfen des Verbindungselements ist mittig ein Rohrabschnitt in der Klemmstellung aufgesetzt und mit dem Zapfen verstiftet oder verschraubt. Der Rohrabschnitt hat die gleiche Beschaffenheit und Dimension wie die auf die beiden Zapfenden aufzuschiebenden Rohrstücke, welche im montierten Zustand nahezu fugenlos am Rohrabschnitt anliegen. Die Anbringung des Rohrabschnitts am Verbindungselement sowie die den Reibschluss bildenden Konturen sind unvollkommen. Das Verdrehen von der Montagestellung in die Klemmstellung verlangt erhebliche Kraft, die an sich nicht der Intensität des damit erreichten Reibschlusses entspricht. Ferner ist es umständlich und erfordert zusätzliche Teile sowie Arbeitsgänge, den Rohrabschnitt auf dem Zapfen zu montieren. Ausserdem ist die eingebrachte Schraube bzw. der Stift von aussen sichtbar und muss - um nicht zu augenfällig zu sein -, sehr exakt eingesetzt sein.

Eine weiter entwickelte Klemmverbindung der vorbeschriebenen Art ist in der Firmenschrift "Converta - vitrashop", Druckvermerk 11.92, der Vitrashop AG, Birsfelden / CH, gezeigt. Anstelle eines auf dem Zapfen fixierten Rohrabschnitts sind die Verbindungselemente hier einstückig ausgebildet mit einem Mittelstück, von dem sich die Zapfen erstrecken. Je nach Konfiguration des Verbindungselements - z.B. als Verlängerung, Winkel, T-Stück oder Kreuz - bestimmt sich die Anzahl und die Erstreckungsrichtung der Zapfen. Damit hat man die Verbindungselemente unkomplizierter und die Montage effizienter gestaltet und die Ästhetik störende Stifte oder Verschraubungen vermieden. Es verblieb aber das Problem, dass eine ausreichende Festigkeit der Klemmverbindungen nur mit grösserem Kraftaufwand bei der Montage und grösserer Materialstärke der Rohrstücke erreichbar war.

### Aufgabe der Erfindung

Angesichts der fortbestehenden Unvollkommenheit bei Klemmverbindungen der hiesigen Gattung liegt der Erfindung die Aufgabe zugrunde, die Festigkeit bei einer hergestellten Klemmverbindung zu erhöhen und den Reibschluss zu intensivieren, jedoch den nötigen Kraftaufwand beim Verdrehen von der Montage- in die Klemmstellung bzw. gegensinnig möglichst zu senken. Die intensive Klemmverbindung soll ferner bei einer möglichst geringen Materialstärke der Rohrstücke erreichbar sein, welche für die Statik eines aufgebauten Präsentationsgestells ausreichende Sicherheit gewährleistet. Den äusseren Gesamteindruck störende Massnahmen durch Stifte, Schrauben, Keile u.ä. sind zu vermeiden. Alle Konfigurationen der Verbindungselemente, welche für den Aufbau von komplexen, vielfach variierten Präsentationsgestellen nötig sind, müssen sich in Serie zu effizienten Kosten rationell herstellen lassen.

### Übersicht über die Erfindung

Die Klemmverbindung ist für ein Präsentationsgestell aus Verbindungselementen und im Querschnitt quadratischen Rohrstücken konzipiert. Ein Verbindungselement weist ein zentrisch angeordnetes Knotenteil auf, von dessen Stirnseiten sich zumindest ein Zapfen erstreckt. Am Zapfen sind vier axial verlaufende und zueinander systematisch versetzte Abflachungen vorhanden, zwischen denen sich vier axial verlaufende und zueinander systematisch versetzte Klemmzonen befinden. Das Rohrstück hat je vier Wandungen und längslaufende Rohrkanten und endet beidseits mit einer Schnittfläche. In der *Montagestellung -* dies ist eine relative Drehstellung zwischen Zapfen und Rohrstück - lässt sich der Zapfen mit den über die Abflachungen verschmälerten Durchmessern des Zapfens in das Rohrstück einschieben. Hierbei nehmen die Abflachungen zur jeweils benachbarten Wandung einen Montagespalt ein und die über die Klemmzonen unverminderten Durchmesser des Zapfens kommen diagonal im Querschnitt des Rohrstücks zu liegen.

In der um 45° gedrehten *Klemmstellung* geraten die Klemmzonen mit der jeweils benachbarten Wandung in Reibschluss und verformen hierbei die Wandungen konvex nach aussen elastisch. Die Abflachungen kommen diagonal im Querschnitt des Rohrstücks zu liegen. Erfindungsgemäss werden die Klemmzonen von Querrippen gebildet, die zwischen den Zapfen umlaufenden Radialnuten liegen, einen oberen Gipfel aufweisen und nach beiden Seiten zu den benachbarten Abflachungen hin abfallen. Beim Drehen in die *Klemmstellung* laufen die Querrippen sukzessive an der jeweils benachbarten Wandung bis zu den Gipfeln auf.

Die nachfolgenden Merkmale beziehen sich auf spezielle Ausführungen der Erfindung. Die Stirnseiten des Knotenteils besitzen den gleichen Querschnitt wie das auf den Zapfen aufzuschiebende Rohrstück. Die Schnittfläche des Rohrstücks lässt sich im Prinzip fugenlos bis an die Stirnseite aufschieben und in der *Klemmstellung* fluchten die Rohrkanten mit den Knotenkanten. Am Knotenteil kann man eine Innengewindebohrung zur Befestigung eines Fuss- oder Abstützelements vorsehen.

An einem dritten oder weiteren Zapfen, der sich von einem Verbindungselement in Relation zu den übrigen Zapfen in eine andere Ebene erstreckt, können zur erleichterten Entformbarkeit bei Druckguss die Klemmzonen nur aus zwischen den Abflachungen liegenden Längsrippen bestehen, welche zuoberst einen Kamm aufweisen. Die Oberflächen des Knotenteils sind in jeweils axialer Erstreckung, fluchtend zu den abgehenden Zapfen, mit einem vom blossen Auge wahrnehmbaren Richtungsschliff bearbeitet, um einen besonderen optischen Effekt zu erzielen. Vom Knotenteil können bis zu sechs Zapfen abgehen. Mit einer Vielzahl von solchen Verbindungselementen und Rohrstücken lässt sich ein Präsentationsgestell errichten, welches zum Aufstellen auf dem Boden oder zum Anhängen konzipiert sein kann.

Bestimmte Rohrstücke weisen ein Lochraster auf, in das Halter für Tragstangen oder Tablare oder in das die Spanner von Querverspannungen einhängbar sind, die sich zu anderen Rohrstücken innerhalb des Präsentationsgestells erstrecken und zur Stabilität des Gestells beitragen.

Der besondere Vorteil der erfindungsgemässen Klemmverbindung liegt darin, dass grössere Längen eines stabileren Rohrs dickerer Wandstärke für den Aufbau ausgedehnter Präsentationsgestelle verwendet werden können und sich dennoch bei mässigem Kraftaufwand die Klemmverbindung mit einem intensiven Reibschluss und hoher Auszugsfestigkeit herstellen lässt. Hierdurch ergeben sich für den Ladenbau attraktive Konstruktions- und Gestaltungsmöglichkeiten.

### Kurzbeschreibung der beigefügten Zeichnungen

- Figur 1A:: ein erfindungsgemässes Verbindungselement in der Gestalt als Winkelstück mit zwei Zapfen;
- Figur 1B:: ein an sich herkömmliches Rohrstück zum Aufbau einer Klemmverbindung;
- Figur 1C:: ein Verbindungselement Winkelstück mit drei Zapfen mit zwei in der Klemmstellung angesetzten Rohrstücken und einem an den dritten Zapfen angenäherten Rohrstück;
- Figur 1D:: die Darstellung gemäss Figur 1C mit an den dritten Zapfen in der Montagestellung angesetztem Rohrstück;
- Figur 1E:: die Darstellung gemäss Figur 1D mit auch am dritten Zapfen in der Klemmstellung angesetztem Rohrstück;
- Figur 2A:: das Funktionsprinzip der Klemmverbindung in der *Montagestellung;*
- Figur 2B:: das Funktionsprinzip der Klemmverbindung in der *Klemmstellung,* theoretischer Zustand;
- Figur 2C:: das Funktionsprinzip der Klemmverbindung in der *Klemmstellung,* realer Zustand;
- Figuren 3A bis 3G:: Verbindungselemente verschiedener Konfiguration;

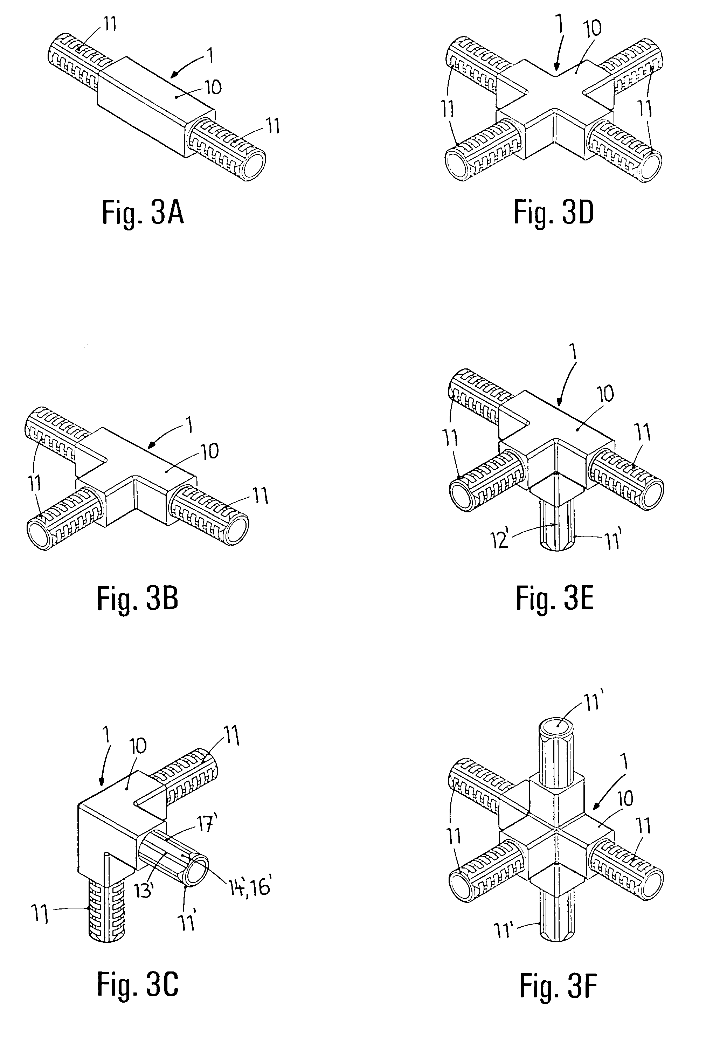

- Figur 3A:: ein Verlängerungsstück mit zwei Zapfen;
- Figur 3B:: ein T-Stück mit drei Zapfen;

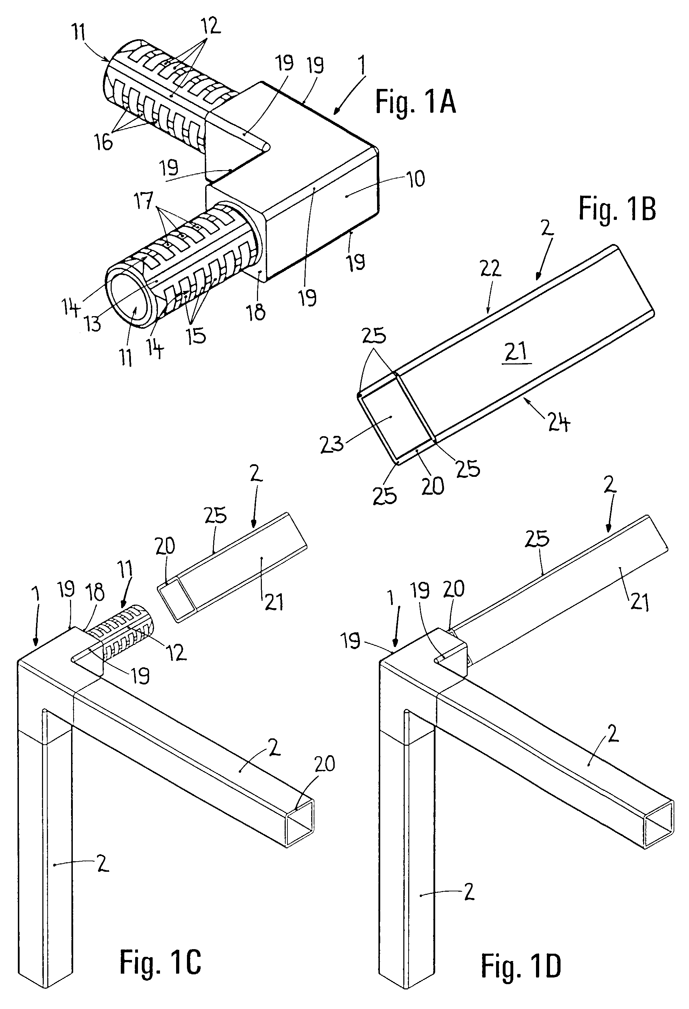

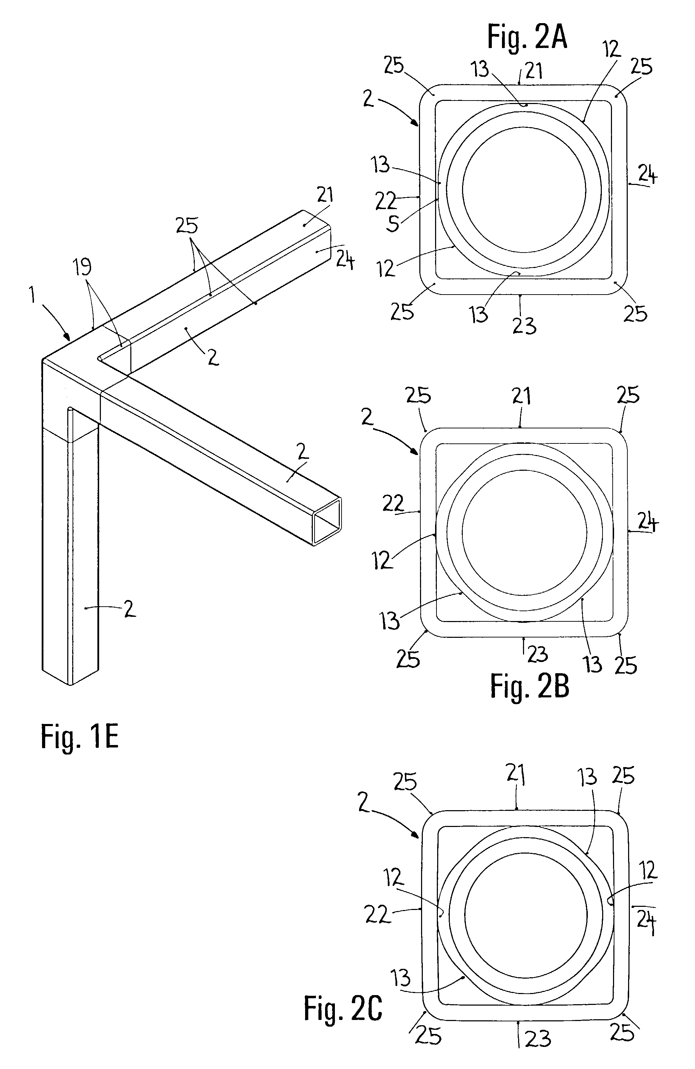

- Figur 3C:: das Winkelstück mit drei Zapfen aus Figur 1C;
- Figur 3D:: ein Kreuzstück mit vier Zapfen;
- Figur 3E:: ein Winkelstück mit vier Zapfen;
- Figur 3F:: das Kreuzstück gemäss Figur 3D mit einem abgehenden fünften Zapfen;

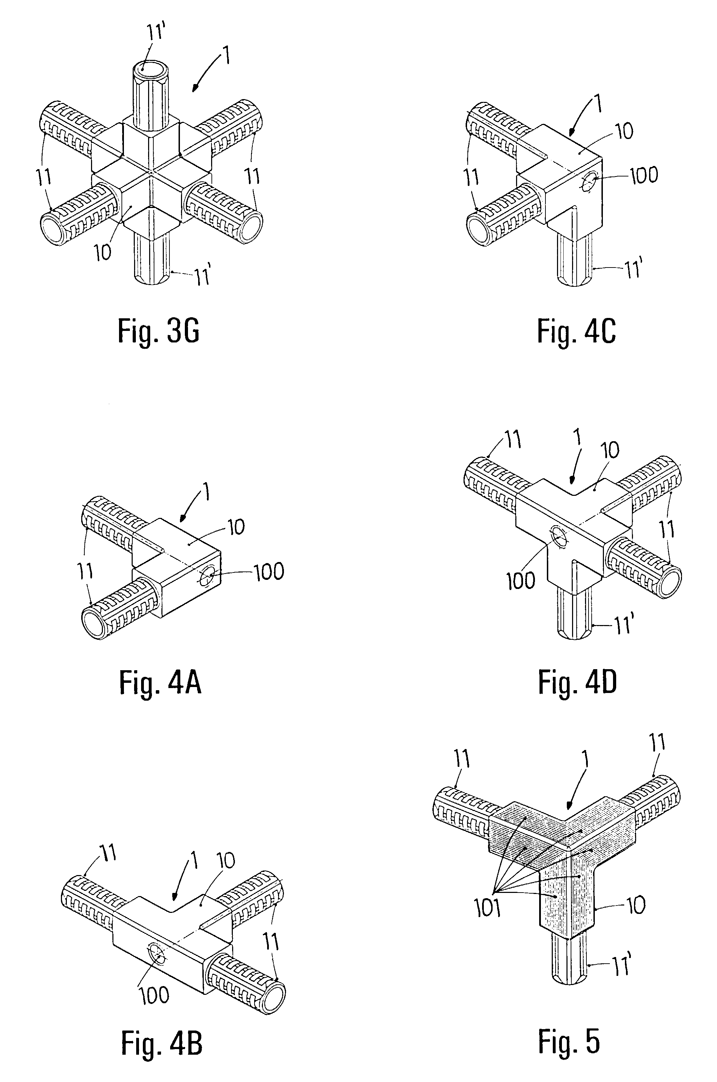

- Figur 3G:: das Kreuzstück gemäss Figur 3D mit diametral abgehendem fünften und sechsten Zapfen;
- Figuren 4A bis 4D:: Verbindungselemente verschiedener Konfiguration mit einer Innengewindebohrung im Knotenteil;
- Figur 4A:: das Winkelstück gemäss Figur 1A;
- Figur 4B:: das T-Stück gemäss Figur 3B;
- Figur 4C:: das Winkelstück gemäss Figur 3C;
- Figur 4D:: das Winkelstück gemäss Figur 3E;
- Figur 5:: das Winkelstück gemäss Figur 3C mit Richtungsschliff;

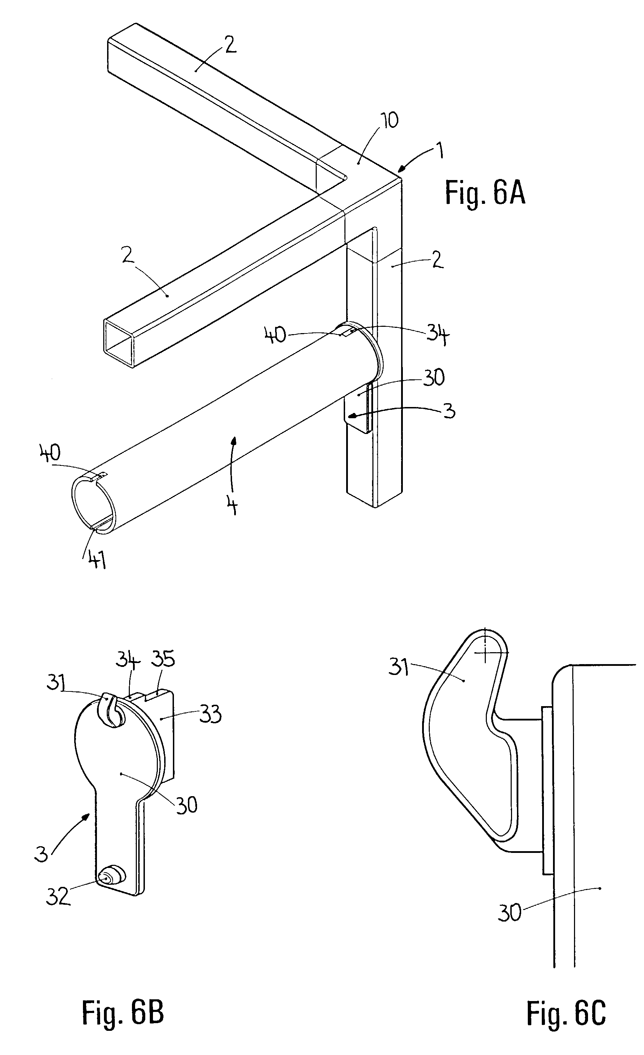

- Figur 6A:: die Darstellung gemäss Figur 1E mit auf einem eingehängten Halter ruhender Tragstange;
- Figur 6B:: den Halter aus Figur 6A;
- Figur 6C:: die Einhängenase des Halters aus Figur 6B in der Vergrösserung;

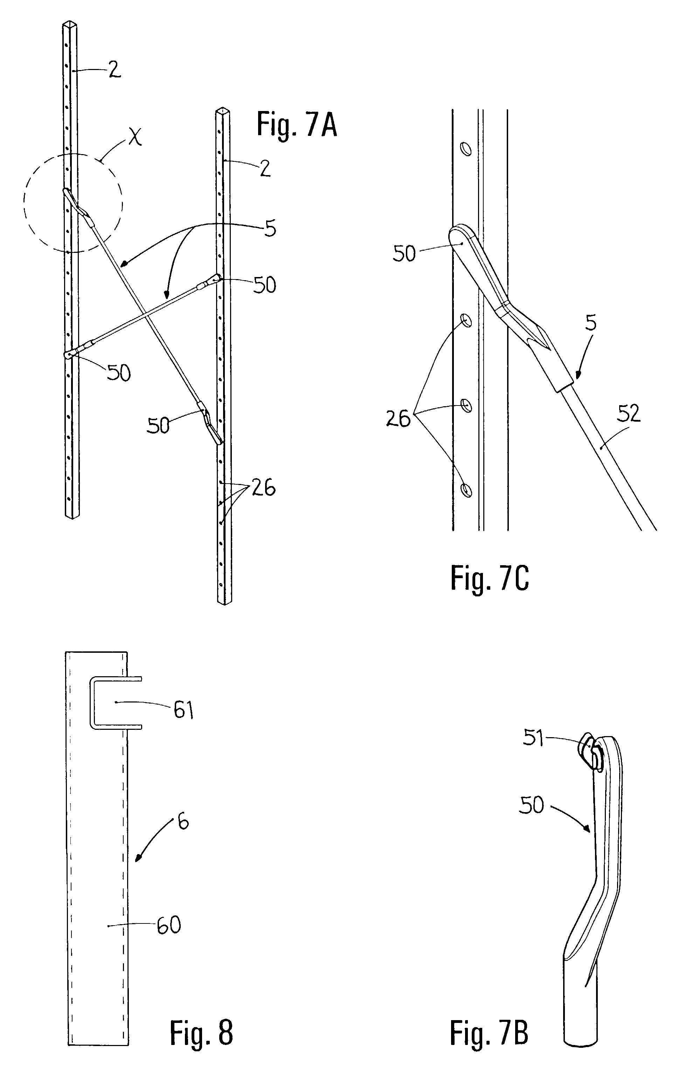

- Figur 7A:: eine kreuzweise Verspannung an zwei Vertikalrohren;
- Figur 7B:: den Spanner aus Figur 7A;
- Figur 7C:: das Detail X aus Figur 7A;
- Figur 8:: einen Montageschlüssel;

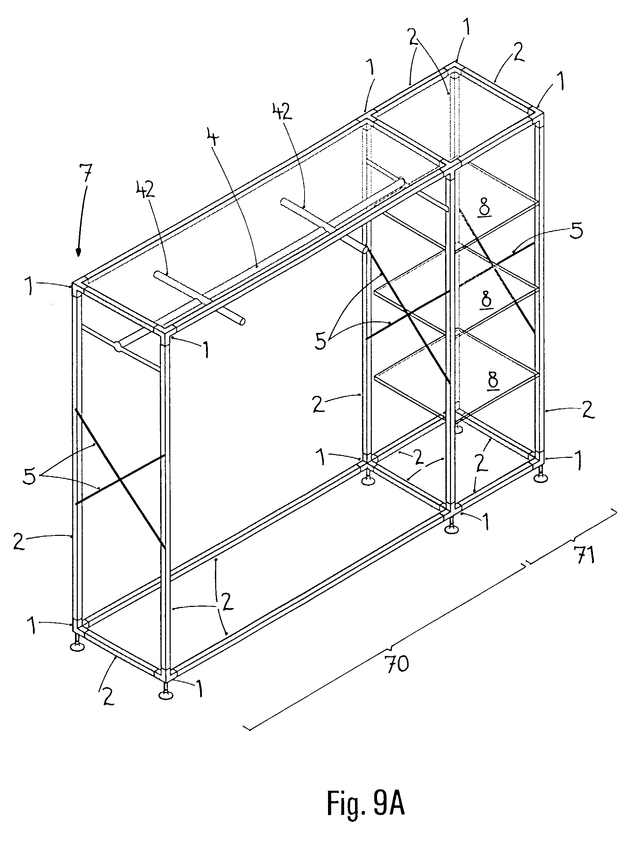

- Figur 9A:: ein am Boden stehendes Präsentationsgestell mit zwei Zellen;

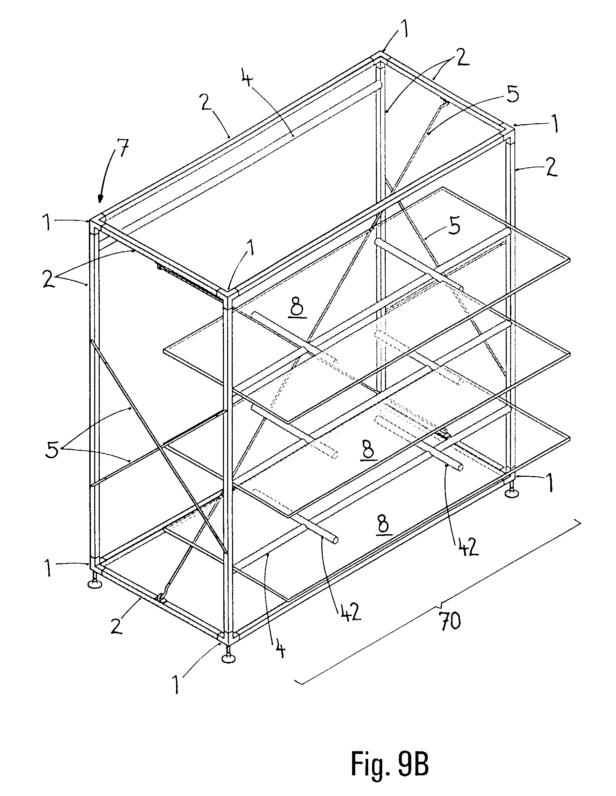

- Figur 9B:: ein am Boden stehendes Präsentationsgestell mit einer Zelle; und

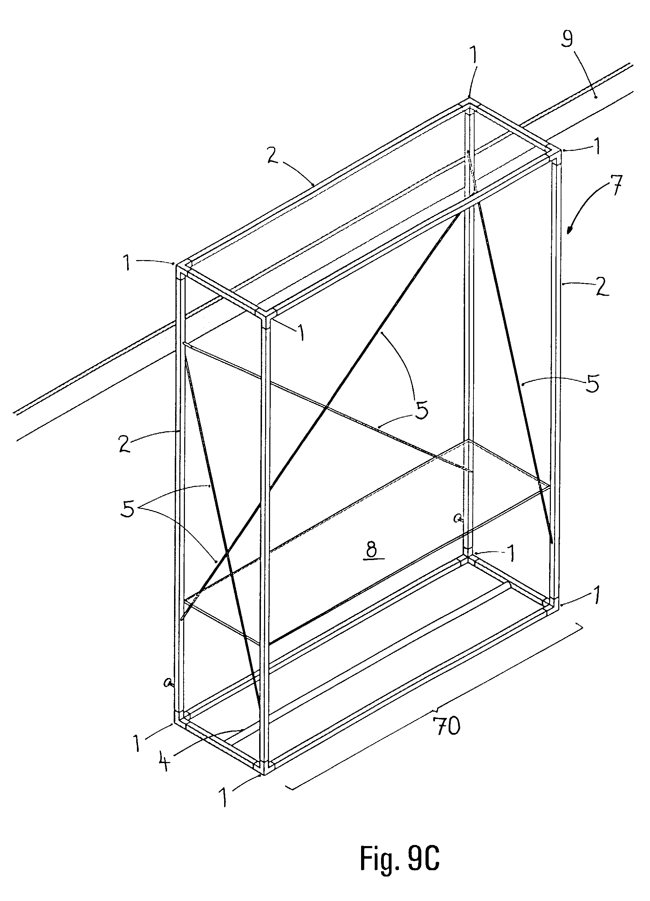

- Figur 9C:: ein an einer Wandschiene aufgehängtes Präsentationsgestell mit einer Zelle.

### Ausführungsbeispiele

Nachstehend erfolgt die detaillierte Beschreibung von Ausführungsbeispielen zur erfindungsgemässen Klemmverbindung, zu den verwendeten Bauteilen und zu mittels der Klemmverbindungen errichteten Präsentationsgestellen. Am Ende der Beschreibung werden wesentliche mögliche Modifikationen erwähnt.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A und 1B

Das Verbindungselement **1** in seiner hier gezeigten Konfiguration als Winkelstück weist das rechtwinklige Knotenteil **10** auf, von dem sich in Fortsetzung des rechten Winkels von den Stirnseiten **18** zwei identische Zapfen **11** in einer Ebene liegend erstrecken. Die Stirnseiten **18** des Knotenteils **10** haben einen quadratischen Querschnitt, während die Zapfen **11** zylindrisch und innen vorzugsweise hohl sind, was Material und Gewicht erspart. Die Zapfen **11** treten zentrisch aus den Stirnseiten **18** aus, wobei der Durchmesser der Zapfen **11** kleiner als der Aussendurchmesser des anzusetzenden Rohrstücks **1** ist.

Äusserlich sind die Zapfen **11** mit einem speziellen Profil **12** zur Erzeugung eines maximalen Reibschlusses für die Klemmverbindung versehen. Dieses Profil **12** wird gebildet aus vier axial verlaufenden, jeweils um 90° versetzten Abflachungen **13**, den zwischen den Abflachungen **13** sich erstreckenden vier Klemmzonen **14** und den auf den Klemmzonen **14** rasterartig aufgebrachten Radialnuten **15**, wobei zwischen jeweils zwei Radialnuten **15** eine streifenförmige Querrippe **16** in der Höhe der Klemmzonen **14** verbleibt. Jede Querrippe **16** steigt von beiden benachbarten Abflachungen **13** zu einem mittig liegenden Gipfel **17** an. An den Gipfeln **17** weist der Zapfen **11** den grössten Durchmesser auf. Die vier Abflachungen **13** sind zu den vier Knotenkanten **19** des Knotenteils **10** orientiert, welche sich in Längsrichtung der Zapfen **11** erstrecken.

Das Rohrstück **2** ist von quadratischem Querschnitt und mit dem Querschnitt der Stirnseiten **18** des Knotenteils **10** kongruent, so dass sich das Rohrstück **2** im Prinzip fugen- und kantenlos mit seiner Schnittfläche **20** an das Knotenteil **10** ansetzen lässt. Am Rohrstück **2** werden die vier identischen Wandungen **21-24** und die längslaufenden Rohrkanten **25** definiert.

### Figuren 1C bis 2C

Mit dieser Figurenfolge wird das Herstellen einer Klemmverbindung als Vorgang gezeigt. An ein Verbindungselement **1** - nun in Gestalt eines Winkelstücks mit drei Zapfen **11** - sind bereits zwei Rohrstücke **2** angesetzt und befinden sich in der *Klemmstellung.* Ein weiteres Rohrstück **2** wird axial zum freien dritten Zapfen **11** positioniert, ist hierbei mit seiner Schnittfläche **20** der Stirnfläche **18** des Verbindungselements **1** zugewandt und die Rohrkanten **25** sind im Verhältnis zu den Knotenkanten **19** um 45° verdreht (s. Figur 1C). In dieser Positionierung lässt sich das Rohrstück **2** auf den freien Zapfen **11** aufschieben, bis die Schnittfläche **20** des Rohrstücks **2** an die Stirnseite **18** des Knotenteils **10** anstösst und befindet sich dann in der *Montagestellung.* (s. Figur 1D). Innerlich sind die Abflachungen **13** am Zapfen **11** den Wandungen **21-24** mit einem Montagespalt **S** mittig zugewandt, während die Klemmzonen **14** diagonal zu den Rohrkanten **25** weisen (s. Figur 2A).

Derart aufgesteckt wird das Rohrstück **2** schliesslich um 45° gedreht, so dass die Knotenkanten **19** mit den Rohrkanten **25** fluchten, womit die *Klemmstellung* erreicht ist (s. Figur 1E). Mit der relativen Verdrehung zwischen dem Verbindungselement **1** und dem Rohrstück **2** um 45° quetschen sich die Klemmzonen **14** jetzt mittig an den Wandungen **21-24** und die Abflachungen **13** zeigen diagonal zu den Rohrkanten **25**. Der Aussendurchmesser zwischen den Gipfeln **17** auf den Querrippen **16** ist grösser als der Innendurchmesser des Rohrstücks **2**, somit überragt jetzt der Zapfen **11** das Rohrstück **2** theoretisch innerlich (s. Figur 2B). Infolge dessen, dass sich der grössere Aussendurchmesser über die Klemmzonen **14** zwischen die engeren zueinander parallelen Wandungen **21,23;22,24** presst, werden die Wandungen **21,23;22,24** nach aussen konvex deformiert (s. Figur 2C). Hierdurch ergibt sich ein Reibschluss zwischen den Klemmzonen **14** und den inneren Wandungen **21-24**. Die Querrippen **16** mit den Gipfeln **17** verringern den Kraftaufwand für die Drehung in die *Klemmstellung* und ausserdem schneiden die Flanken der Querrippen **16** in die Wandungen **21-24**, so dass die Klemmverbindung einer höheren Auszugskraft widersteht.

### Figuren 3A bis 3G

Diese Figurenfolge soll verschiedene Konfigurationen des Verbindungselements **1** veranschaulichen, wobei alle Verbindungselemente **1** zentral ein Knotenteil **10** mit den Stirnseiten **18** und den Knotenkanten **19** sowie mehrere Zapfen **11** mit dem Profil **12** aufweisen. Das Winkelstück **1** mit zwei Zapfen **11** (s. Figur 1A), das Verlängerungsstück **1** mit zwei Zapfen **11** (s. Figur 3A), das T-Stück **1** mit drei Zapfen **11** (s. Figur 3B) und das Kreuzstück **1** mit vier Zapfen **11** (s. Figur 3D) spannen eine Ebene auf. Das Winkelstück **1** mit drei Zapfen **11** (s. Figur 3C) und das Winkelstück **1** mit vier Zapfen **11** (s. Figur 3E) spannen zwei Ebenen auf. Das Kreuzstück **1** mit fünf Zapfen **11** (s. Figur 3F) und das Kreuzstück **1** mit sechs Zapfen **11** (s. Figur 3G) spannen drei Ebenen auf.

Stellt man die Verbindungselemente **1** im Druckgussverfahren her, kann es für das Entnehmen aus der Gussform zur Begrenzung des Werkzeugaufwands sinnvoll sein, die sich in die zweite und dritte Ebene erstreckenden Zapfen **11'** mit einem vereinfachten Profil **12'** und vereinfachten Klemmzonen **14'** zu versehen. Man verzichtet auf die radial am Zapfen **11'** umlaufende Oberflächenstruktur. Diese Zapfen **11'** sind mit vier sich axial erstreckenden, jeweils um 90° versetzten Hohlkehlen **13'** ausgestattet, zwischen denen sich erhabene Längsrippen **16'** befinden, welche die Klemmzonen **14'** bilden, von den benachbarten Hohlkehlen **13'** aufsteigen und jeweils einen oberen Kamm **17'** aufweisen. Diese vereinfachten Zapfen **11'** stellen einen Kompromiss zwischen Aufwand und Funktion dar. Bei spanender Bearbeitung wird man alle Zapfen **11** mit dem vollständigen Profil **12** herstellen.

### Figuren 4A bis 4D

Zum Befestigen eines Fusses, einer Rolle oder eines Distanzstückes kann man im Knotenteil **10** auf einer Fläche, von der sich kein Zapfen **11,11'** erstreckt, eine Innengewindebohrung **100** vorsehen.

### Figur 5

Ein besonderer Gestaltungseffekt ergibt sich, wenn die Oberflächen des Knotenteils **10** in jeweils axialer Erstreckung, fluchtend zu den abgehenden Zapfen **11,11',** mit einem vom blossen Auge wahrnehmbaren Richtungsschliff **101** bearbeitet sind.

### Figuren 6A bis 6C

Zum Anordnen einer Tragstange **4** innerhalb eines Präsentationsgestells ist ein in das Rohrstück **2** einhängbarer Halter **3** vorgesehen. Der Halter **3** besitzt eine Basisplatte **30**, nahe dessen oberer Kante auf der Rückseite eine nach oben ragende, zur Rückseite hin gebogene Einhängenase **31** entspringt. Nahe der unteren Kante der Basisplatte **30** entspringt auf der Rückseite eine Stütznase **32**. Beide Nasen **30,31** sind in ein im Rohrstück **2** vorhandenes Lochraster einhängbar. Auf der Vorderseite der Basisplatte **30** ist eine vertikal orientierte Stützplatte **33** rechtwinklig aufgesetzt. Diese Stützplatte **33** ist oben abgestuft, so dass zur Basisplatte **30** hin ein erhöhter Sims **34** und eine davon abgesenkte Stufe **35** entsteht. An der Tragstange **4** sind an den Enden vertikal übereinander liegende Einschnitte **40,41** vorgesehen, wobei der obere Einschnitt **40** eine geringere Tiefe als der untere Einschnitt **41** hat. Die Einschnitte **40,41** sind so bemessen, dass die Stützplatte **33** in den unteren Einschnitt **41** einfahren kann, während der Sims **34** im oberen Einschnitt **40** bündig zu liegen kommt und die Stufe **35** die Tragstange **4** innerlich untergreift.

### Figuren 7A und 7C

Zur Stabilisierung innerhalb eines aufgebauten Präsentationsgestells gibt es eine Querverspannung **5**, die man vornehmlich einsetzen wird, wenn das Gestell freistehend aufgestellt ist. Eine Querverspannung **5** besteht aus zwei Spannern **50**, zwischen denen sich eine Spannstrebe **52** erstreckt. Jeder Spanner **50** weist eine Einhängenase **51** auf, die in ein Loch des im Rohrstück **2** vorgesehenen Lochrasters **26** einhängbar ist. Eine besondere Stabilisierung erreicht man mit der Anordnung von zwei sich kreuzenden Querverspannungen **5**.

### Figur 8

Der Montageschlüssel **6** dient zum Ansetzen an den Rohrstücken **2** und den Knotenteilen **10** der Verbindungselemente **1**, um Klemmverbindungen herzustellen bzw. zu lösen. Beim Verdrehen in die *Klemmstellung* ermöglicht der Montageschlüssel **6** auch die exakte Ausrichtung zwischen den Knotenkanten **19** und den Rohrkanten **25**. In seiner einfachsten, prinzipiellen Gestalt hat der Montageschlüssel **6** einen Stielgriff **60** und eine U-förmige Schlüsselöffnung **61** in der Dimension des Rohrstücks **2** und des Knotenteils **10**.

### Figur 9A

Das mittels verschieden konfigurierter Verbindungselemente **1** und Rohrstücken **2** unterschiedlicher Länge aufgebaute Präsentationsgestell **7** besitzt zwei Zellen **70,71**. In die rechte Gestellzelle **71** sind Tablare **8** eingesetzt. Die Abstützung der Tablare **8** könnte z.B. auf nicht dargestellten Rastteilen erfolgen, welche in das Lochraster **26** der vertikal angeordneten Rohrstücke **2** eingesteckt sind. Kreuzweise angebrachte Querverspannungen **5** bewirken die zusätzliche Stabilisierung des gesamten Präsentationsgestells **7**. In die linke Gestellzelle **70** ist eine Tragstange **4** eingesetzt, welche Querträger **42** aufweist. Das ganze Präsentationsgestell **7** ruht auf Füssen und ist zur Aufstellung am Boden konzipiert.

### Figur 9B

Auch dieses Präsentationsgestell **7** mit nur einer Gestellzelle **70** ist zur Aufstellung am Boden vorgesehen. Seitliche Querverspannungen **5** sowie eine diagonal durch die Gestellzelle **70** verlaufende Querverspannung **5** sorgen für ausreichende Sicherheit in der Stabilität. Auf mit Haltern **3** eingesetzten Tragstangen **4**, die mit Querträgern **42** ergänzt sind, liegen Tablare **8** auf, welche hier als Gestaltungsbeispiel nur etwa halb in die Gestellzelle **70** hineinragen, während die vorderen Hälften der Tablare **8** aus der Gestellzelle **70** herausragen. Eine Tragstange **4** an der Hinterseite des Präsentationsgestells **7** könnte zum direkten Anhängen von Waren oder einer Dekoration dienen.

### Figur 9C

Das hier gezeigte Präsentationsgestell **7** mit seiner einen Gestellzelle **70** ist an eine Wandschiene **9** angehängt. Es besitzt wiederum Querverspannungen **5**, ein eingesetztes Tablar **8** sowie eine im Boden des Präsentationsgestell **7** angeordnete Tragstange **4**.

Ausdrücklich erwähnt seien noch folgende Abwandlungsmöglichkeiten der bisher beschriebenen Klemmverbindung:
- Im Prinzip wären am Zapfen **11,11'** zwei gegenüber liegende Klemmzonen **14,14'** ausreichend.
- Das Rohrstück **2** könnte anstelle des quadratischen Querschnitts auch oval, drei- fünf- oder sechskantig sein, wobei quadratisches Material am geeignetsten sein dürfte.
- Die Palette der Verbindungselemente **1** liesse sich noch mit verschiedenen Abwinkelungen von z.B. 30°, 45° und 60° erweitern.

## Patentansprüche

1. Klemmverbindung für ein Präsentationsgestell (**7**) aus Verbindungselementen (**1**) und im Querschnitt quadratischen Rohrstücken (**2**), wobei:
a) ein Verbindungselement (**1**) ein zentrisch angeordnetes Knotenteil (**10**) aufweist, von dessen Stirnseiten (**18**) sich zumindest ein Zapfen (**11**) erstreckt;
b) am Zapfen (**11**) vier axial verlaufende und zueinander systematisch versetzte Abflachungen (**13**) vorhanden sind, zwischen denen sich vier axial verlaufende und zueinander systematisch versetzte Klemmzonen (**14**) befinden;
c) das Rohrstück (**2**) vier Wandungen (**21-24**) und vier längslaufende Rohrkanten (**25**) aufweist und beidseits mit einer Schnittfläche (**20**) endet;
d) in der *Montagestellung* als relative Drehstellung zwischen Zapfen (**11**) und Rohrstück (**2**) sich der Zapfen (**11**) mit den über die Abflachungen (**13**) verschmälerten Durchmessern des Zapfens (**11**) in das Rohrstück (**2**) einschieben lässt, wobei die Abflachungen (**13**) zur jeweils benachbarten Wandung (**21-24**) einen Montagespalt (**S**) einnehmen, während die über die Klemmzonen (**14**) unverminderten Durchmesser des Zapfens (**11**) diagonal im Querschnitt des Rohrstücks (**2**) zu liegen kommen;
e) in der um 45° gedrehten *Klemmstellung* die Klemmzonen (**14**) mit der jeweils benachbarten Wandung (**21-24**) in Reibschluss geraten und hierbei die Wandungen (**21-24**) konvex nach aussen elastisch verformen, während die Abflachungen (**13**) diagonal im Querschnitt des Rohrstücks (**2**) zu liegen kommen, dadurch gekennzeichnet, dass
f) die Klemmzonen (**14**) von Querrippen (**16**) gebildet werden, die zwischen den Zapfen (**11**) umlaufenden Radialnuten (**15**) liegen, einen oberen Gipfel (**17**) aufweisen und nach beiden Seiten zu den benachbarten Abflachungen (**13**) hin abfallen; und
g) beim Drehen in die *Klemmstellung* die Querrippen (**16**) sukzessive an der jeweils benachbarten Wandung (**21-24**) bis zu den Gipfeln (**17**) auflaufen.

2. Klemmverbindung nach Anspruch 1, dadurch gekennzeichnet, dass
a) die Stirnseiten (**18**) des Knotenteils (**10**) den gleichen Querschnitt aufweisen wie das auf den Zapfen (**11**) aufzuschiebende Rohrstück (**2**);
b) die Schnittfläche (**20**) des Rohrstücks (**2**) im Prinzip fugenlos bis an die Stirnseite (**18**) aufschiebbar ist; und
c) in der *Klemmstellung* die Rohrkanten (**25**) mit den Knotenkanten (**19**) fluchten.

3. Klemmverbindung nach Anspruch 1 oder 2, dadurch gekennzeichnet, dass am Knotenteil (**10**) eine Innengewindebohrung (**100**) zur Befestigung eines Fuss- oder Abstützelements vorgesehen ist.

4. Klemmverbindung nach einem der Ansprüche 1 bis 3, dadurch gekennzeichnet, dass an einem dritten oder weiteren Zapfen (**11'**), der sich von einem Verbindungselement (**1**) in Relation zu den übrigen Zapfen (**11**) in eine andere Ebene erstreckt, die Klemmzonen (**14'**) nur aus zwischen den Abflachungen (**13'**) liegenden Längsrippen (**16'**) bestehen, welche zuoberst einen Kamm (**17'**) aufweisen.

5. Klemmverbindung nach einem der Ansprüche 1 bis 4, dadurch gekennzeichnet, dass die Oberflächen des Knotenteils (**10**) in jeweils axialer Erstreckung, fluchtend zu den abgehenden Zapfen (**11,11'**), mit einem vom blossen Auge wahrnehmbaren Richtungsschliff (**101**) bearbeitet sind.

6. Klemmverbindung nach einem der Ansprüche 1 bis 5, dadurch gekennzeichnet, dass vom Knotenteil (**10**) bis zu sechs Zapfen (**11,11'**) abgehen.

7. Klemmverbindung nach einem der Ansprüche 1 bis 6, dadurch gekennzeichnet, dass
a) mit einer Vielzahl von Verbindungselementen (**1**) und Rohrstücken (**2**) ein Präsentationsgestell (**7**) errichtet ist;
b) das Präsentationsgestell (**7**) zum Aufstellen auf dem Boden oder Anhängen konzipiert ist;
c) zumindest ausgewählte Rohrstücke (**2**) ein Lochraster (**26**) aufweisen, in das Halter (**3**) für Tragstangen (**4**) oder Tablare (**8**) oder in das die Spanner (**50**) von Querverspannungen (**5**) einhängbar sind, die sich zu anderen Rohrstücken (**2**) innerhalb des Präsentationsgestells (**7**) erstrecken.
